# EUROPÄISCHE PATENTSCHRIFT

(11) **EP 1 285 303 B1**
(45) Veröffentlichungstag und Bekanntmachung des Hinweises auf die Patenterteilung: **29.12.2004**
(21) Anmeldenummer: 01945216.8
(22) Anmeldetag: 30.05.2001
(51) Int. Cl.: G02B 27/01, G06F 3/00, H04Q 7/32

(54) **SYSTEM ZUR ERZEUGUNG EINES VIRTUELLEN DISPLAYS**
SYSTEM FOR GENERATING A VIRTUAL DISPLAY
SYSTEME POUR PRODUIRE UN AFFICHAGE VIRTUEL

(30) Priorität: 31.05.2000 DE 10027136
(43) Veröffentlichungstag der Anmeldung: 26.02.2003
(73) Patentinhaber: Grasso, Luigi, 1006 Lausanne (CH)
(72) Erfinder: Grasso, Luigi, 1006 Lausanne (CH)
(74) Vertreter: Farago, Peter Andreas, Dipl.-Ing.
(86) Internationale Anmeldenummer: PCT/EP2001/006155
(87) Internationale Veröffentlichungsnummer: WO 2001/092944

(56) Entgegenhaltungen:
- EP-A- 0 935 183
- US-A- 5 959 781
- PATENT ABSTRACTS OF JAPAN vol. 1997, no. 05, 30. Mai 1997 (1997-05-30) & JP 09 009301 A (VICTOR CO OF JAPAN LTD), 10. Januar 1997 (1997-01-10)
- PATENT ABSTRACTS OF JAPAN vol. 1995, no. 02, 31. März 1995 (1995-03-31) & JP 06 326944 A (OLYMPUS OPTICAL CO LTD), 25. November 1994 (1994-11-25)

## Beschreibung

Die vorliegende Erfindung betrifft ein System zur Erzeugung eines virtuellen Displays und insbesondere ein System zur Erzeugung einer virtuellen Arbeitsstation, das über eine Internetverbindung oder dergleichen verfügt.

In jüngster Zeit hat das Internet eine weite Verbreitung erfahren und es besteht die Notwendigkeit eines mobilen Zugangs zu Daten, die über das Internet verfügbar sind. Der mobile Zugang erfolgt in der Regel mittels eines Gerätes, das in der Lage ist, Daten zu senden und zu empfangen und diese sowohl visuell als auch akustisch anzuzeigen. Derartig bekannte Geräte kommunizieren mit dem Internet über ein herkömmliches Funknetz (z.B. ein GSM-Funknetz oder dergleichen) und sind insofern nachteilig, da sie eine begrenzte Displayfläche aufweisen. Eine Vergrößerung der Displayfläche verursacht wiederum eine Zunahme der Abmessungen des Kommunikationsgeräts, die mit einer Verringerung der Mobilität einhergeht.

Zu den Geräten mit einem flächenmäßig limitierten Display zählen sogenannte WAP-Mobilsysteme, die zur Zeit bestenfalls mit einem vierzeiligen schwarzweißen LC-Display ausgestattet sind. Eine Erhöhung auf sechs Farbzeilen ist für die kommenden zwei Jahre vorgesehen. Daher sind derartige bekannte WAP-Mobilsysteme in vorhersehbarer Zukunft nicht für moderne hochauflösende Internetanwendungen einsetzbar.

Andererseits weisen größere Displays, wie z.B. jene, die in einem tragbaren Computer vorhanden sind, zwar eine ausreichende Auflösung auf, die jedoch mit einer eingeschränkten Mobilität und einer durch den hohen Energieverbrauch verursachten geringen netzunabhängigen Funktionsdauer einhergeht. Eine Kompromißlösung zum tragbaren Computer, die vom sogenannten Organizer oder Palmtop zur Verfügung gestellt wird, weist trotz erhöhter Mobilität auch eine relativ begrenzte Displayfläche auf.

EP-A-0 935 183 beschreibt einen Computer mit einem "Head-up Display" bei dem ein virtueller Bildschirm mit einem Bild der Umgebung hinterlegt wird.

Daher ist nach dem jetzigen Stand der Technik der mobile Zugang zum Internet was das Display anbelangt dermaßen begrenzt und rudimentär, daß die Anzahl der Benutzer noch sehr gering ist. Darüber hinaus wird die mobile Benutzung des Internets durch die oben genannten Nachteile der tragbaren Computer beschränkt.

Ein weiterer Nachteil der bekannten Kommunikationsgeräte ist die mangelnde Geheimhaltung, da es sowohl bei WAP-Mobilsystemen als auch bei tragbaren Computern oder Organizern nicht möglich ist, den Benutzer während der Eingabe von Codes für das Online-Banking oder das E-Commerce oder während der Eingabe von Geheimdokumenten von einem unerlaubten Beobachter zu schützen. Dies ist besonders in der Öffentlichkeit oder in öffentlichen Einrichtungen wie Flughäfen, Bahnhöfen usw., wo die Wartezeit zur Erledigung diverser Online-Transaktionen oder von Korrespondenz genutzt wird, problematisch.

Daher ist es eine Aufgabe der vorliegenden Erfindung ein System zur Erzeugung eines virtuellen Displays zur Verfügung zu stellen, das die vorstehend geschilderten Nachteile vermeidet.

Eine weitere Aufgabe der vorliegenden Erfindung besteht in der Bereitstellung eines Systems zur Erzeugung eines virtuellen Displays, das für das Auge eines Beobachters ein Bild erzeugt, das im wesentlichen stationär zu einem beliebig auswählbaren Bezugspunkt ist.

Ferner besteht eine Aufgabe der vorliegenden Erfindung in der Bereitstellung eines mobilen Systems zur Erzeugung eines virtuellen Displays, das eine schnelle Funkverbindung mit dem Internet, einem Intranet oder einem ferngelegenen Server aufbauen kann.

Darüber hinaus ist es eine zusätzliche Aufgabe der vorliegenden Erfindung, ein System zur Erzeugung eines virtuellen Displays zu schaffen, das über ein bequem und leicht zu bedienendes Eingabemittel verfügt.

Diese und weitere der nachstehenden Beschreibung zu entnehmenden Aufgaben werden von einem System zur Erzeugung eines virtuellen Displays gemäß den anliegenden Ansprüchen gelöst.

Weitere Merkmale und Vorteile sind deutlicher der folgenden Beschreibung der zur Zeit bevorzugten exemplarischen Ausführungsformen des erfindungsgemäßen Systems zur Erzeugung eines virtuellen Displays, unter Hinweis auf beiliegenden Zeichnungen zu entnehmen. Dabei zeigen:
Fig. 1 eine typische aus dem Stand der Technik bekannte Arbeitsstation;
Fig. 2A eine erste Ausführungsform des erfindungsgemäßen Systems zur Erzeugung eines virtuellen Displays, das eine in einem Mobiltelefon eingeschlossene Verarbeitungseinheit umfaßt;
Fig. 2B eine zweite Ausführungsform des erfindungsgemäßen Systems zur Erzeugung eines virtuellen Displays, das eine separate Verarbeitungseinheit umfaßt;
Fig. 3 eine für die Erfindung typische Verbindungsstrecke von einem Funktelefon zu einem ferngelegenen Server;
Fig. 4 eine erfindungsgemäße Einrichtung zur Bestimmung der Raumwinkelstellung der Video-Brille der Figuren 2A oder 2B in Bezug zur Tastatur;
Fig. 4A eine in der Einrichtung der Fig. 4 eingesetzte Mikrolinse;
Fig. 5A eine einen aktiven und passiven Modus aufweisende Video-Brille;
Fig. 5B ein typisches Bild, das auf der Video-Brille angezeigt wird, mit einem aktiven und einem passiven Bereich;
die Figuren 6A bis 6C ein Ausführungsbeispiel der Tastatur mit einem in die Tastatur einführbaren Sensor;
die Figuren 7A bis 7C die Änderung des virtuellen Displays abhängig von der Raumwinkelstellung des Benutzers in Bezug zur Tastatur;
Fig. 8 ein Blockschaltbild der Verarbeitungseinheit in Übereinstimmung mit der vorliegenden Erfindung; und
Figuren 9, 9A und 9B eine Ausführungsform der Sensorik mit einer Kamera und einen als LED-Anordnung ausgeführter Bezugspunkt.

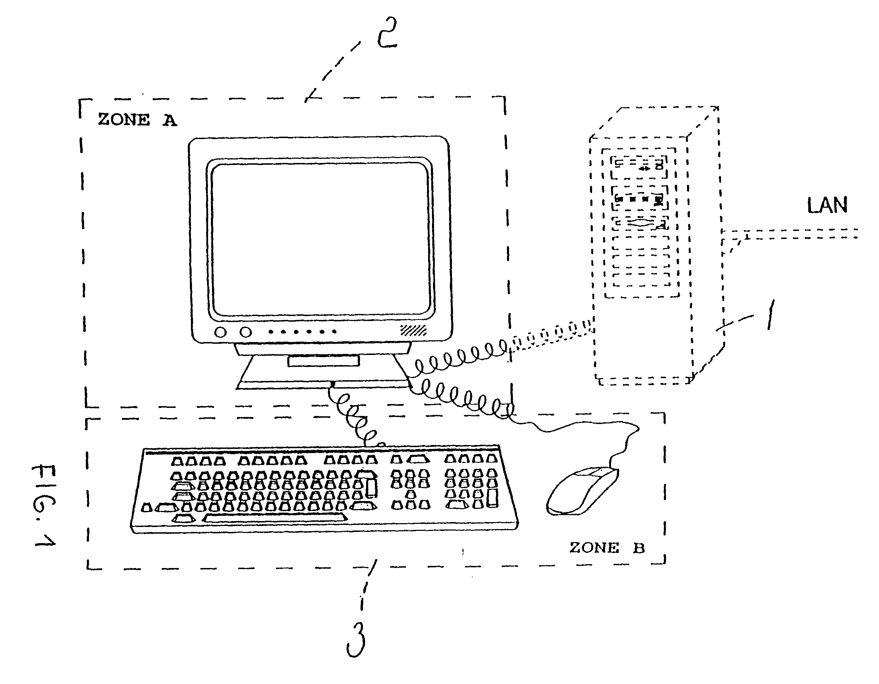

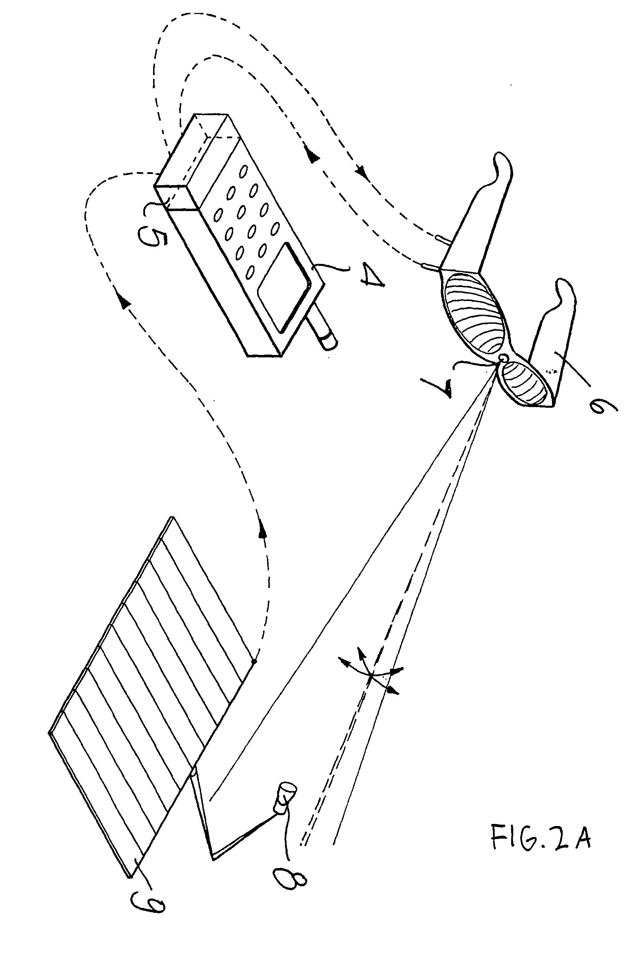

Unter Bezugnahme auf Fig. 1 wird eine aus dem Stand der Technik bekannte Arbeitsstation gezeigt, die aus einem mit einem Netz (LAN oder WAN) verbundenen Computer 1, einem Display 2, und einer aus einer Tastatur und Maus bestehenden Eingabeeinheit 3 besteht. Das Display 2 ist in einem mit A bezeichneten Bereich befindlich. Die Eingabeeinheit 3 ist in einem mit B bezeichneten Bereich befindlich.

In der gegenwärtig bevorzugten Ausführungsform der Erfindung ist es beabsichtigt, das Bild des virtuellen Displays in Form einer Arbeitsstation wie in Fig. 1 gezeigt, zu erzeugen, wobei in einem derartigen Fall das erfindungsgemäße System zur Erzeugung eines virtuellen Displays ausgebildet ist, um die Bereiche A und B der Station der Fig. 1 anzuzeigen. Jedoch ist auch die Abbildung anderer Umgebungen im virtuellen Display denkbar ohne sich vom Erfindungsgedanken zu lösen.

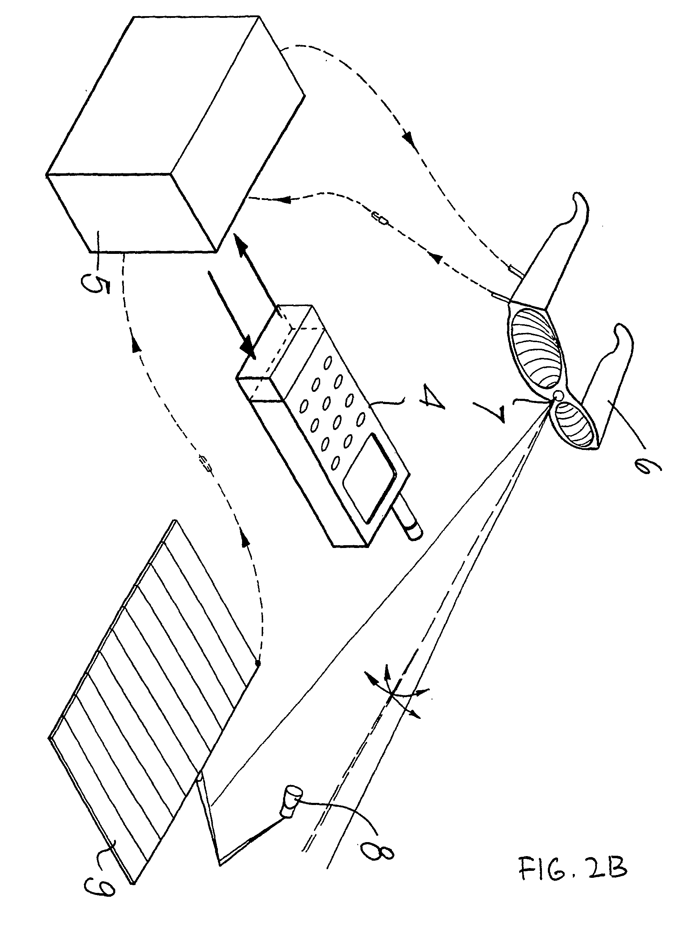

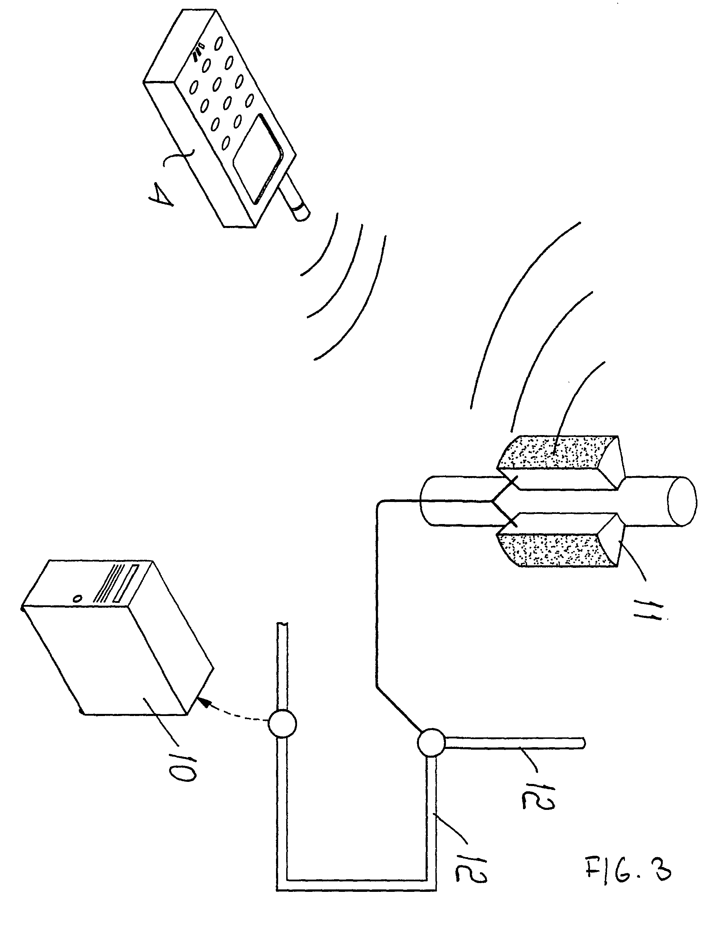

Das erfindungsgemäße System zur Erzeugung eines virtuellen Displays umfaßt, wie in Fig. 2A gezeigt, ein Mobiltelefon 4, das sowohl eine Sende- und Empfangseinrichtung aufweist als auch eine Verarbeitungseinheit 5, deren Wirkungsweise später erläutert wird. Die Verarbeitungseinheit 5 kann ein integraler Bestandteil des Mobiltelefons 5 sein; alternativ kann sie als vom Mobiltelefon 5 getrennte Einheit, wie in Fig. 2B gezeigt, ausgebildet werden. In beiden Fällen besteht eine bidirektionale Verbindung zur Sende- und Empfangseinrichtung derart, daß die Verarbeitungseinheit 5 über das Mobiltelefon 4, ein Funknetz (z.B. GSM, GPRS oder UMTS oder dergleichen), eine geeignete Antenne 11 und ein Servernetzwerk 12 mit einem in Fig. 3 gezeigten ferngelegenen Server 10 kommunizieren kann. Der Server 10 kann als Daten- und/oder Programmserver ausgebildet sein, der die erforderlichen Daten und/oder Programme über das Funknetz dem Benutzer zur Verfügung stellt. Der Server 10 kann darüber hinaus die Verbindung (das Gateway) zum Internet oder zu einem Intranet mit entsprechenden Daten und/oder Ressourcen zur Verfügung stellen. Erfindungsgemäß kann der Server 10 jede der vorstehend erwähnten Funktionen (Daten, Programme, oder Internetzugang) in Alleinstellung oder in Kombination aufweisen.

Das System der vorliegenden Erfindung umfaßt desweiteren, wie in den Figuren 2A und 2B gezeigt, eine Video-Brille 6 (head mounted display - HMD), die der von der Firma Sony unter den Handelsnamen Glasstron erhältlichen LCD-Brille ähnlich ist. Die Video-Brille 6 ist zusätzlich mit in den Figuren nicht gezeigten Kopfhörern oder dergleichen ausgestattet. Die Video-Brille 6 kommuniziert schnurlos oder über ein Kabel mit der Verarbeitungseinheit 5, um Video- und Audiodaten zu empfangen. Die verfügbaren Video-Brillen weisen zur Zeit eine SVGA Auflösung auf (600 x 800 Pixel) und können daher einen dynamischen 30-Zoll Bildschirm in einer Entfernung von etwa 1,2 Meter simulieren. Selbstverständlich sind andere Video-Brillen mit niedrigerer oder höherer Auflösung, soweit vorhanden, einsetzbar. Das Gewicht der Video-Brille selbst beträgt ca. 100 Gramm. Gemäß einer Ausführungsform der Erfindung muß die Video-Brille derart ausgebildet sein, daß Sie selektiv, in bestimmbaren Bereichen der LCD in einem Displaymodus (aktiven Modus) oder einem durchsichtigen bzw. passiven Modus betreibbar ist.

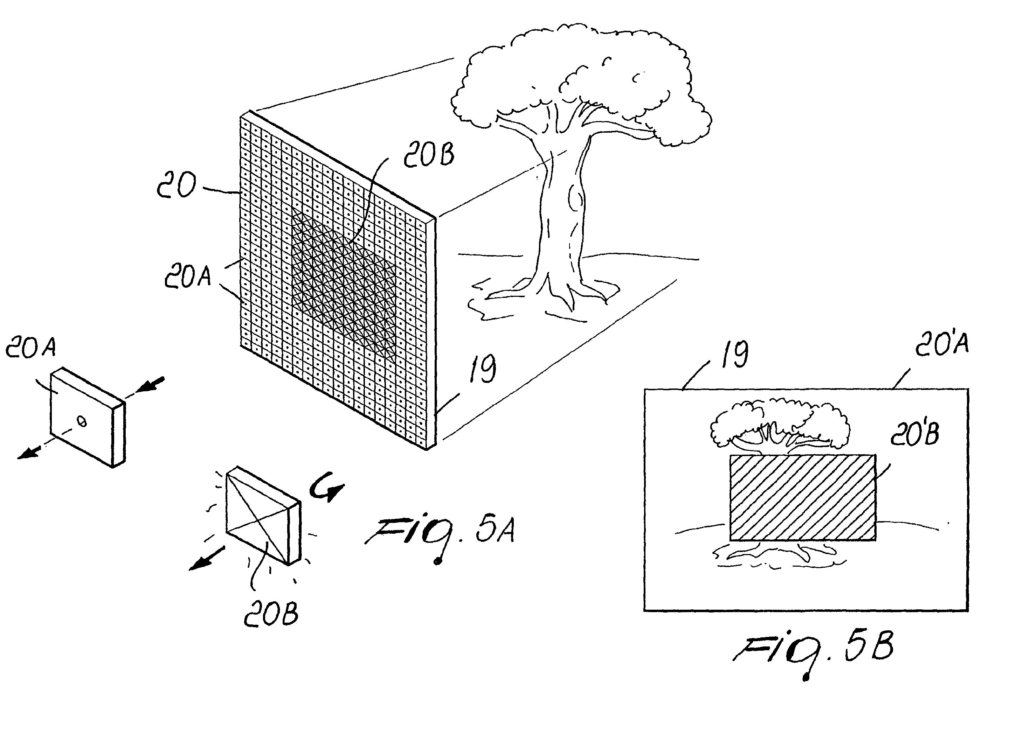

Die vorstehend beschriebene Sony-Glasstron Video-Brille weist den durchsichtigen bzw. passiven Modus auf und ist daher für die Zwecke der Erfindung geeignet. Die Grundzüge der einen aktiven und einen passiven Modus aufweisenden Video-Brillen werden unter Bezugnahme auf die Figuren 5A und 5B näher erläutert, in denen exemplarisch eine einzige Linse 19 der Video-Brille 6 schematisch dargestellt wird. Die dargestellte Linse 19 weist eine Matrixzelle auf, deren Elemente einzeln oder in Gruppen steuerbar sind. In Fig. 5A wird ein Teil der Matrixzellen der Linse im aktiven Modus betrieben. Diese Matrixzellen sind in der Fig. 5A in Form eines mit einem diagonalen Kreuz versehenen Vierecks 20B dargestellt und senden dem Auge des Benutzers ein farbiges Teilbild in Übereinstimmung mit dem Steuersignal, das einer lokal in der Verarbeitungseinheit oder entfernt (im Server, im Internet, einem Intranet oder dergleichen) laufenden Anwendung entspricht. Das vom einem externen Gegenstand einfallende Licht wird reflektiert. Die passiven Matrixzellen sind als mit einem Punkt versehene Vierecke 20A dargestellt und lassen im wesentlichen das Licht von einem beobachteten externen Gegenstand (hier ein Baum) durch. Dem Auge des Benutzers der Video-Brille wird das in Fig. 5B schematisch dargestellte Bild zugeführt, wobei der aktive Bereich 20'B bedingt durch die Eingabe der Verarbeitungseinheit 5, des Servers 10 oder dergleichen eine Textverarbeitungsumgebung, Browser usw. darstellen kann. Im passiven Bereich 20'A sind Teile des im Hintergrund stehenden Gegenstands ersichtlich. Der aktive Bereich 20'B der Fig. 5B ist in Übereinstimmung mit dem nachstehend erläuterten Steuersignal der Verarbeitungseinheit 5 in der Ebene der Matrixzellen verschiebbar. Obwohl der aktive Bereich in den Figuren 5A und 5B rechteckig dargestellt wurde, kann dieser erfindungsgemäß andere Formen annehmen, die durch eine dem Fachmann bekannte Steuerung des Displays erzielt werden können. Ebenfalls kann durch eine geeignete Steuerung des Displays eine Vielzahl von nebeneinandergeordneten oder überlappenden Bereichen erzeugt werden, die analog zu den im Programmierwesen bekannten Fenstern verschiebbar sind. Darüber hinaus ist sowohl eine zweidimensionale als auch eine dreidimensionale Anordnung der Bereiche im virtuellen Display erfindungsgemäß möglich.

Das System der Figuren 2A und 2B weist weiterhin eine Tastatur 9 auf, die an die Verarbeitungseinheit 5 über eine geeignete Verbindung (schnurlos, Kabel, Stecker) gekoppelt ist. Die Tastatur kann z.B. als Falttastatur der Art ausgeführt werden, die derzeit in Verbindung mit Palmtops oder Organizern eingesetzt wird. Alternativ zur Tastatur kann eine eingabe bereitgestellt werden.

Nach einem wichtigen Aspekt der vorliegenden Erfindung wird das System zur Erzeugung eines virtuellen Displays mit einer Einrichtung zur Bestimmung der räumlichen Stellung der Video-Brille 6 in Bezug zu einem willkürlich auswählbaren Punkt ausgestattet.

Da in der gegenwärtig bevorzugten Ausführungsform die virtuelle Abbildung einer Arbeitsstation beabsichtigt ist, wird als Bezugspunkt die Tastatur 9, insbesondere ein mittlerer Bereich der Tastatur ausgewählt. Weiterhin genügt es, gemäß der vorstehend erwähnten Anwendung zur virtuellen Abbildung einer Arbeitsstation, daß die Einrichtung nur die Raumwinkelstellung in Bezug zur Tastatur bestimmt. Soweit für andere Anwendungen erforderlich, kann die Einrichtung auch zur Bestimmung der Raumstellung ausgebildet sein, um die Stellung der Video-Brille 6 zu einem willkürlich auswählbaren Bezugspunkt zu erfassen.

In den Figuren 2A und 2B wird eine Einrichtung zur Bestimmung der Raumwinkelstellung gezeigt, bestehend aus einem im mittleren Bereich der Video-Brille 6 angeordneten Laserzeiger 7 und einem über der Tastatur 9 in einem mittleren Bereich an einem Sensorstab 24 angebrachten Sensor 8. Obwohl in den Figuren 2A und 2B zur Veranschaulichung ein einziger Sensor gezeigt wird, ist es für den Fachmann verständlich, daß die gesamte Sensorik aus mindestens zwei beabstandeten Einzelsensoren (Sensoranordnung) besteht, sofern eine vollständige Raumwinkelerfassung erforderlich sind. Zur Vereinfachung wird jedoch in der nachstehenden Beschreibung auch der Ausdruck "Sensor" zur Bezeichnung der Sensoranordnung mit mindestens zwei beabstandeten Sensoren beibehalten.

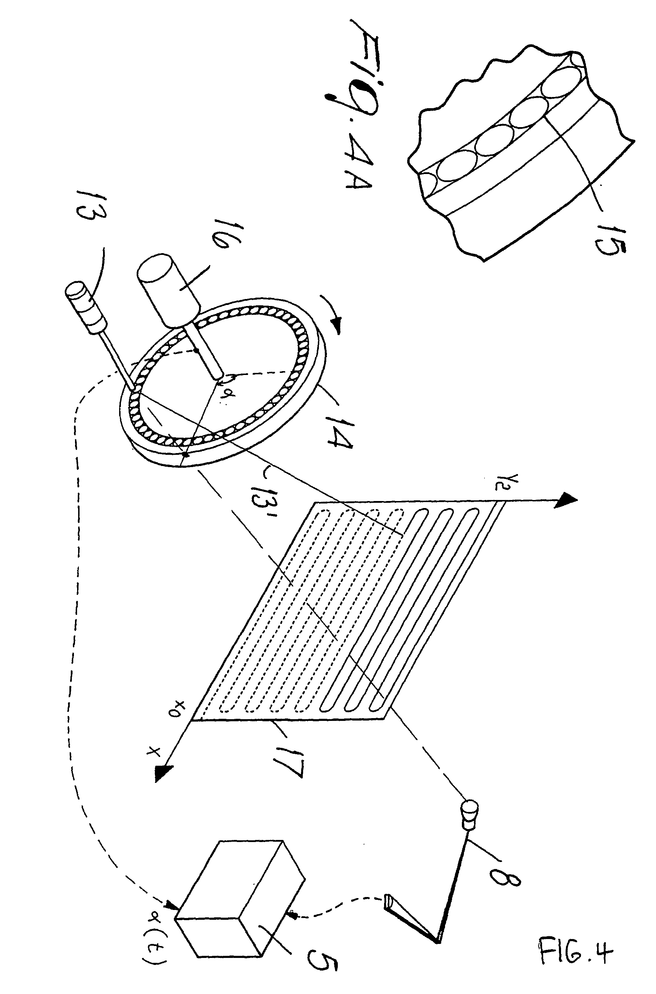

Der Laserzeiger 7 besteht, wie in Fig. 4 gezeigt, aus einer Laserquelle 13 mit einem gebündelten Laserstrahl 13', einem drehbaren Linsenrad 14 mit einer Vielzahl von symmetrisch angeordneten Mikrolinsen 15, und einem Schrittmotor 16 zur Drehung des Linsenrads 14 mit einer konstanten Winkelgeschwindigkeit. Die Mikrolinsen 15 sind in der Lage, die Richtung des Laserstahls 13' abhängig vom seinem Einfallspunkt abzuändern. Somit entsteht ein in Fig. 4 zu sehender virtueller rechteckiger Bereich 17, der im wesentlichen parallel zur Ebene der Video-Brille 5 steht und vom Laserstrahl 13' periodisch abgetastet wird. Dieser Vorgang ist einer in der Kathodenröhre des herkömmlichen Fernsehers stattfindenden Abtastung ähnlich. Anhand der Beziehung bzw. der zeitlichen Differenz zwischen den vom Schrittmotor 16 erzeugten Zeilensignalen a(t), die mit jeder vollen Umdrehung des Linsenrads 14 ausgegeben werden, und eines Erfassungssignals des Sensors 8 bestimmt die Verarbeitungseinheit 5 die Stellung des Sensors 8 bzw. der Tastatur 9 in Bezug zum Bereich 17 und folglich die Raumwinkelstellung der Video-Brille 6.

Obwohl im vorliegend beschriebenen Ausführungsbeispiel die Einrichtung zur Bestimmung der Raumwinkelstellung der Video-Brille 6 in Bezug zur Tastatur 9 als ein Laserzeiger 7 mit einem entsprechenden Sensor (bzw. Sensorik) 8 beschrieben wurde, ist es für den Fachmann auf dem Gebiet verständlich, daß weitere Einrichtungen zur Erfassung einer räumlichen Stellung, wie z.B. Videokameras mit extrem geringen Abmessungen, einsetzbar sind. Derartige miniaturisierte Videokameras sind an der Brille anbringbar, wobei ein entsprechender Referenzmarkierer an der Tastatur befindlich ist. Es ist selbstverständlich auch möglich, den Markierer an der Brille und die Kameras an der Tastatur anzubringen. Analoges gilt für die Anbringung des Senders an die Tastatur und des Sensors (bzw. der Sensorik) an die Video-Brille 6.

Als besonders vorteilhaft hat sich in der Praxis die Anordnung der Fig, 9 erwiesen. Dabei wird eine monochromatische Videokamera 100 mit einer Bündelungslinse 101 und einem Lichtfilter 102 eingesetzt. Als Bezugspunkt werden mindestes drei lichtemittierende LEDs 103 verwendet, die in einer Dreiecksanordnung ausgebildet sind. Die Kamera ist auf die Wellenlängen der LEDs abgestimmt und braucht keine hohe Auflösung zu haben. In der Tat ist eine 50 x 50 Pixel Auflösung ausreichend.

Bezugszeichen 104 bezeichnet die von der Kamera "gesehene" LED-Anordnung in einer Bezugsposition vor einer Verschiebung. Bezugszeichen 105 bezeichnet die von der Kamera "gesehene" LED-Anordnung nach einer Verschiebung.

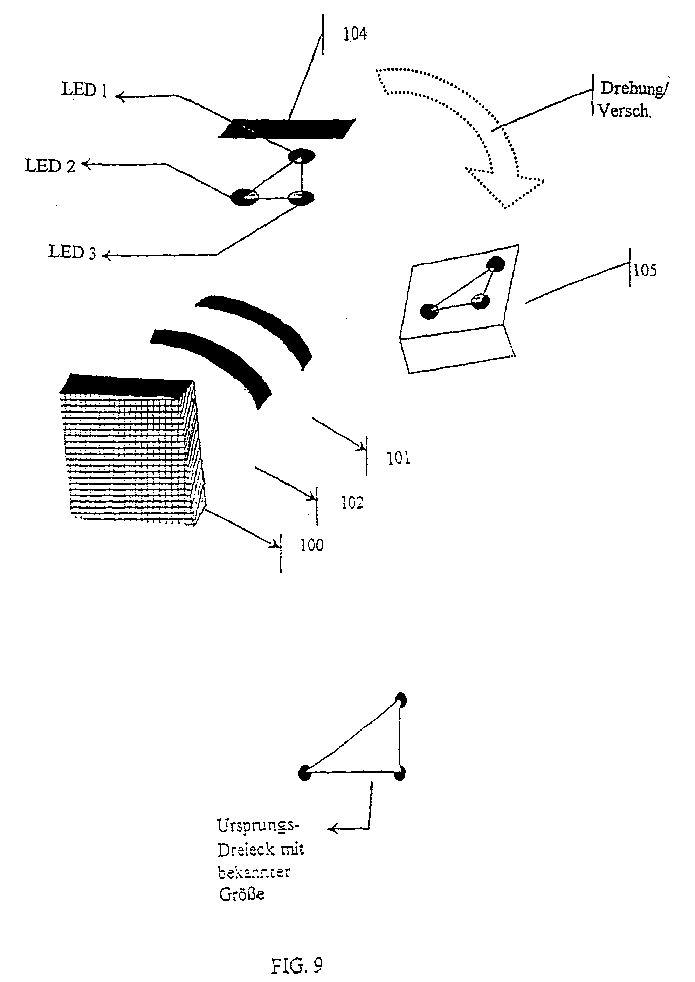

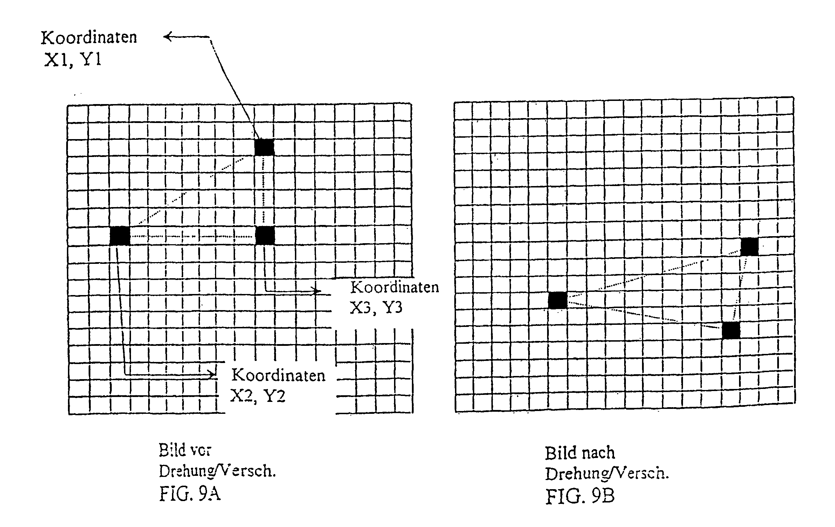

In den Figuren 9A und 9B wird die "gesehene" LED-Anordnung in der Kameraebene vor und nach der Verschiebung gezeigt. Eine genaue Bestimmung der Raumwinkelstellung erfolgt unter Verwendung herkömmlicher geometrischer Regeln, wobei die in der Fig. 9A gezeigte Bezugsposition mit der der Fig. 9B verglichen wird.

Darüber hinaus können zur Vermeidung von Störungen des Kamerasystems durch das Umgebungslicht die LEDs mit gepulstem Licht betrieben werden. Dieser Betrieb erleichtert die Erkennung einer jeder LED im Kamerabild und verringert den Energieverbrauch der Anordnung.

Alternativ zur Linsenrad/Schrittmotor-Lösung, die verwendet wird, um eine kontinuierliche Ablenkung des Laserstrahls zu erzeugen, ist es auch möglich eine Kaskadenanordnung von zwei oder mehreren spannungsgesteuerten Lichtablenkungselementen (sogenannte MEM), die z.B. von DIGILENS unter den Handelsnamen ASIL vertrieben werden. In der Kaskadenanordnung ist es möglich, zwei MEM-Elemente senkrecht zueinander anzuordnen, so daß der ganze Raum abgedeckt wird. Darüber hinaus ist es möglich Zellen von Flüssigkristallen oder an einem piezoelektrischen Keramiksubstrat gebundene Linsen einzusetzen.

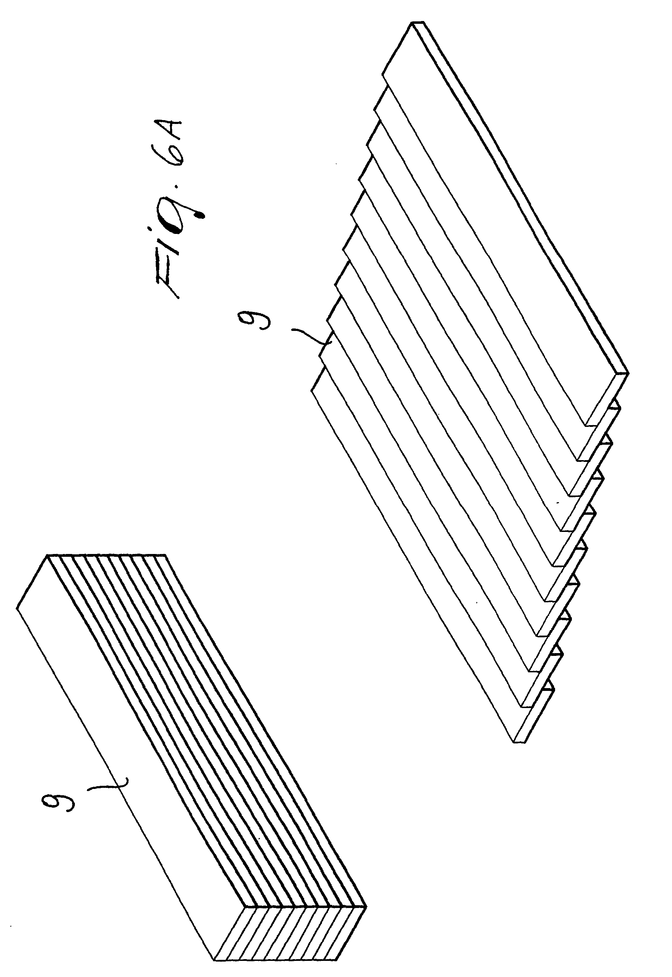

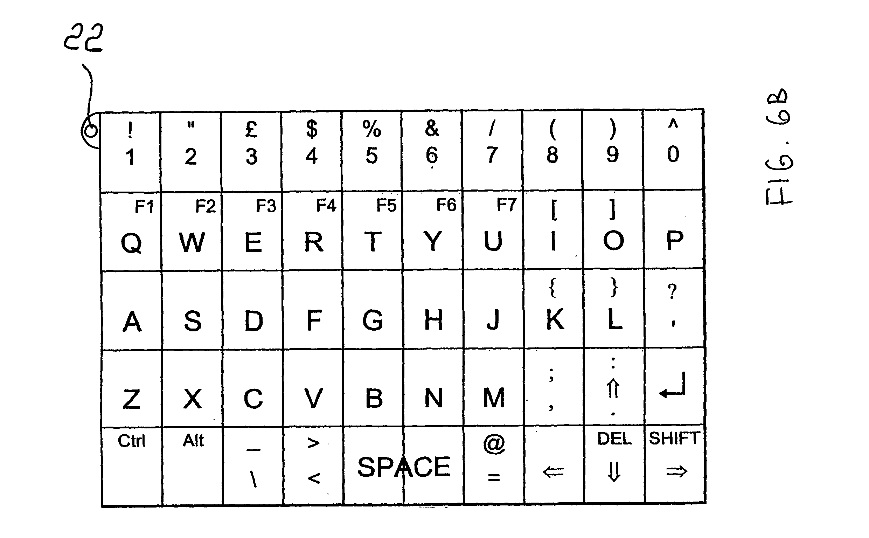

Die Tastatur 9 kann wie bereits erwähnt als Falttastatur ausgeführt werden. In Fig. 6A wird die Tastatur 9 in ihrem zusammengefalteten Zustand bzw. einem Zustand der kurz vor der vollständigen Ausbreitung liegt, gezeigt. Bevorzugt weisen die einzelnen Elemente der Tastatur eine Länge von ca. 10 cm, eine Breite von ca. 1,5 cm und eine Tiefe von 0,2 cm. Die Gesamthöhe der zusammengefalteten Tastatur liegt bei etwa 2 cm. Fig. 6B zeigt die Tastatur 9 in einem vollständig ausgebreiteten Zustand. Die Abmessungen in diesem Zustand betragen etwa 10 x 15 cm, was in der Praxis als hinreichend von einem durchschnittlichen Benutzer befunden wird. Die Tastatur 9 kann schnurlos (z.B. über eine IR-Schnittstelle wie Bluetooth), mit einem geeigneten Kabel oder fest an das Mobiltelefon 4 angeschlossen werden, wobei sie Daten an das Mobiltelefon bzw. die Verarbeitungseinheit überträgt. Weiterhin kann die Tastatur mit einem Touchpad 22 ausgestattet werden, das die Funktionsfähigkeit einer herkömmlichen Computermaus hat. Alternativ kann auch eine Schnittstelle für eine Computermaus bestehen.

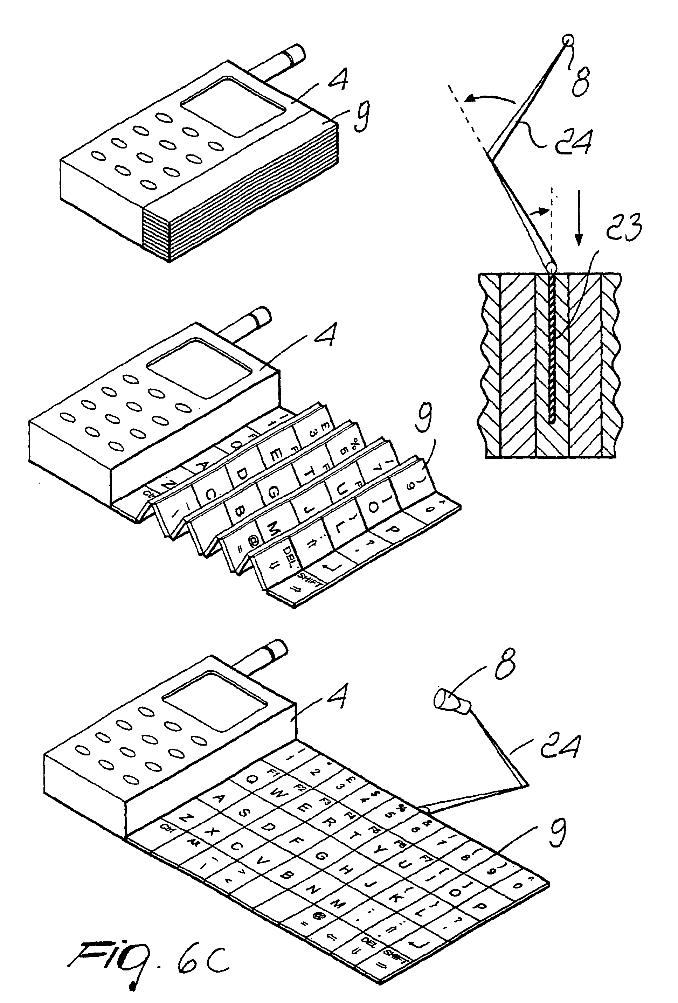

Die Fig. 6C zeigt eine Ausführungsform der Erfindung, in der die Tastatur 9 fest am Mobiltelefon 4 angeschlossen ist. Die Rückseite der Tastatur 9 weist einen Einschnitt 23 auf, in den der an der Tastatur 9 gelenkig angebrachte Sensorstab 24 einführbar ist. Je nach Länge kann der Sensorstab 24 ein oder mehrere Gelenke aufweisen. In der Fig. 6C wird ein einziges Gelenk gezeigt. Auch eine teleskopische Ausführung ist denkbar.

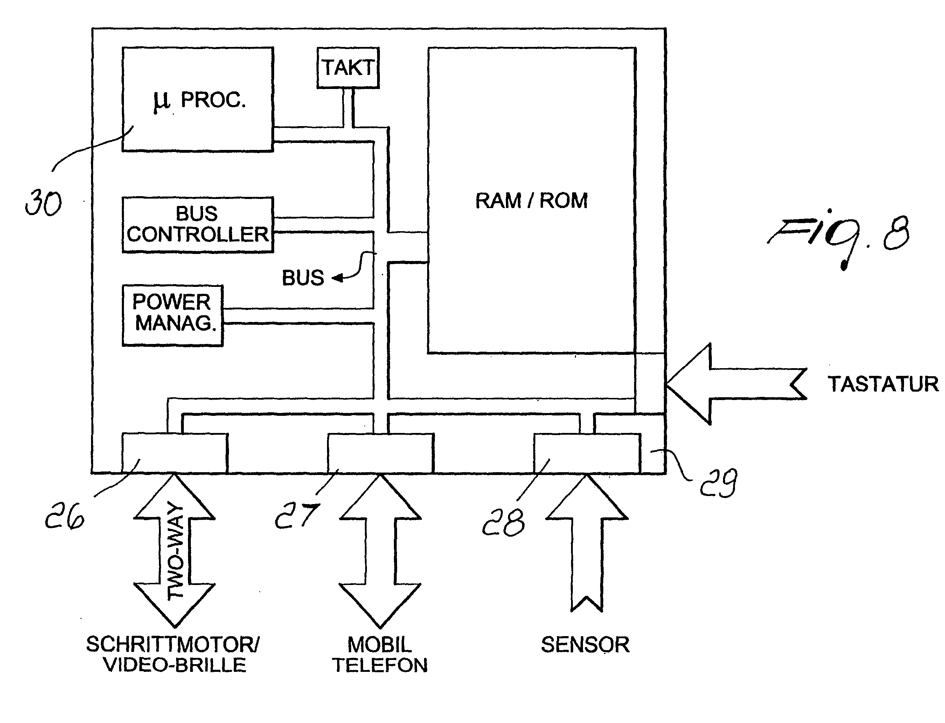

Unter Bezugnahme auf die Fig. 8 wird nunmehr eine Verarbeitungseinheit beschrieben, die in Übereinstimmung mit der vorliegenden Erfindung zum Einsatz gebracht wird.

Die Verarbeitungseinheit 5 umfaßt E/A-Schnittstellen 26 bis 29, die jeweils als Eingaben die vom Schrittmotor 16 erzeugten Zeilensignale a(t), die Erfassungssignale des Sensors 8, die Signale der Tastatur 9 und des Mobiltelefons 4 erhalten. Zwei der E/A-Schnittstellen 26 und 27 sind bidirektional ausgebildet, so daß das Senden von Daten an die Video-Brille 6 und an das Mobiltelefon 4 möglich ist. Die Verarbeitungseinheit 5 umfaßt weiterhin die üblichen Bestandteile, nämlich Speicher (RAM/ROM) Bus-Controller, Bus, Powermanagement, die dem Fachmann wohl bekannt sind und daher nicht näher erläutert werden. Die Verarbeitungseinheit 5 kann von einem bereits bekannten Betriebssystem betrieben werden, wie z.B. ein Linux basierendes Betriebssystem oder WindowsCE. Auch ist eine Java-Plattform erforderlich, um HTML- oder WML-Dateien zu verarbeiten und die WAP-Protokoue nandzunaben.

Die Verarbeitungseinheit 5 errechnet anhand der erhaltenen Zeilensignale a(t) des Schrittmotors 16 und der Erfassungssignale des Sensors 8 die Raumstellung bzw. die Raumwinkelstellung der Video-Brille 6 in Bezug zur Tastatur 9 sobald das "Treffer"-Signal vom Sensor ausgegeben wird. Letzteres signalisiert, daß der Laserstahl 13' des Laserzeigers 7 im Erfassungsbereich des Sensors 8 befindlich ist bzw. den Sensor "getroffen" hat.

Nach Erfassung der exakten Raumwinkelstellung der Video-Brille 6 erzeugt die Verarbeitungseinheit 5 die für den Betrieb der Video-Brille 6 erforderlichen Signale.

Zum einen erzeugt die Verarbeitungseinheit 5 ein Matrixzellen-Auswahlsignal, das die aktiven bzw. die passiven Matrixzellen auswählt. Der aktive Bereich ist in Fig. 5B als Rechteck 20'B und in Fig. 7A als Rechteck 25 ersichtlich. Der aktive Bereich entspricht dem vom virtuellen Display angezeigten Bild. Mit der Verdrehung des Kopfes (bzw. der aufgesetzten Video-Brille) errechnet der Prozessor 30 der Verarbeitungseinheit 5 die Verschiebung des von virtuellen Display angezeigten Bildes in Übereinstimmung mit der neuen Raumwinkelstellung. Da diese Verschiebung kontinuierlich mit der Bewegung des Kopfes bzw. der Video-Brille erfolgt, hat der Benutzer den Eindruck, daß das Bild des virtuellen Displays eine im wesentlichen feste Raumstellung einnimmt. Sobald der Benutzer seinen Kopf um mehr als eine vorbestimmten Winkel in Bezug zur Tastatur (z.B. 90°) verdreht, bricht der Kontakt des Laserstahls 13' zum Sensor 8 ab und das "Treffer"-Signal wird abgeschaltet, was wiederum die Verarbeitungseinheit 5 dazu veranlaßt, den aktiven Bereich komplett zu deaktivieren und im passiven Modus zu betreiben. Vorzugsweise ist der Prozessor 30 auch mit einer DSP-Einheit ausgebildet. Im passiven Modus wird dem Auge des Benutzers ein "Außenbild" zur Verfügung gestellt, das dem Bild entspricht, das der Benutzer ohne aufgesetzter Video-Brille sehen würde. Der passive Modus wird durch Betreiben der Matrixzellen in einem lichtdurchlässigen Modus realisiert.

Weiterhin erzeugt die Verarbeitungseinheit 5 Farbsignale für jede der aktiven Matrixzellen. Daraus entsteht das im aktiven Bereich des virtuellen Displays ersichtliche Bild. Das Bild kann auf einer Vielzahl von Quellen basieren, die dem Fachmann auf dem Gebiet wohl bekannt sind und daher hier nicht weiter erläutert werden. Derartige Quellen umfassen HTML-Seiten, WML-Seiten, Videos, Animationen, Xtrem-Bilder von einem UNIX-System, Fenster eines Texteditors oder eines Mailprogramms usw.

Die Wirkungsweise des mobilen System zur Erzeugung eines virtuellen Displays ist wie folgt. Zunächst wird die Falttastatur 9 ausgebreitet und die Verarbeitungseinheit 5 gestartet. Danach wird über das Mobiltelefon 4 und über einen Mobilfunkkanal (GPRS, UMTS oder dergleichen) eine schnelle Verbindung zum Server 10 hergestellt. Dieser stellt seinerseits, falls erwünscht, die Verbindung zum Internet oder einem Intranet her. Alternativ kann der Server über den Funkkanal direkt Daten und/oder Programme bereitstellen. Falls der Benutzer es wünscht lokal zu Arbeiten, muß keine Verbindung zur Server hergestellt werden. In diesem lokalen Modus ist jedoch der Benutzer durch die relativ begrenzte Speicher- und Verarbeitungskapazität der Verarbeitungseinheit 5 eingeschränkt, was dennoch für einige Anwendungen akzeptabel sein mag.

Anschließend wird die gewünschte Anwendung oder das Gateway über eine Tastatureingabe oder dergleichen gestartet und die Raumwinkelstellung der Video-Brille 6 vom Sensor 8 und von der Verarbeitungseinheit 5 überwacht.

Solange der Benutzer mit seiner Video-Brille 6 die in Fig. 7A gezeigte Stellung einhält, wird die gewünschte Anwendung (Bild) in der Mitte der Linse 19 eingeblendet. Dieser mit Bezugszeichen 25 bezeichnete aktive Bereich ist schraffiert in Fig. 7A eingezeichnet. Im übrigen erlaubt die Linse 19 die freie Durchsicht durch den passiven Bereich auf die im Sichtfeld des Benutzers befindlichen Gegenstände. In den Figuren 7A bis 7C bestehen die gezeigten Gegenstände aus Ziffern zur besseren Verdeutlichung der Verschiebung der virtuellen Abbildung.

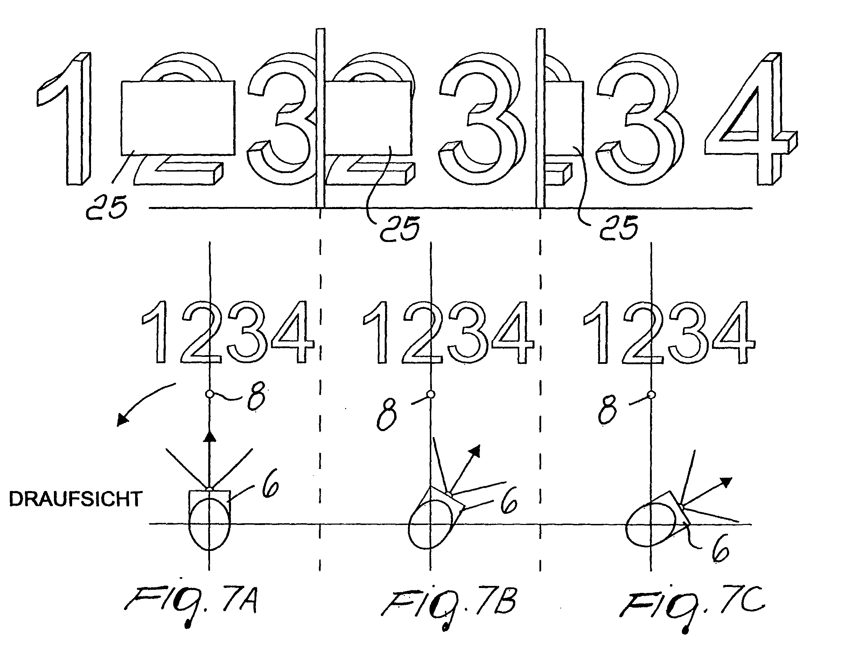

Sobald der Benutzer seinen Kopf (und folglich die Video-Brille) wie in Fig. 7B gezeigt nach rechts verdreht, wird die Verschiebung (d.h. der Raumwinkel) der Brille 6 in Bezug zur Tastatur 9 wie vorstehend im Zusammenhang mit Fig. 4 beschrieben erfaßt und die Verarbeitungseinheit 5 verschiebt ihrerseits den aktiven Bereich 25 in Abhängigkeit zum erfaßten Raumwinkel, so daß das Bild des virtuellen Displays nur noch zum Teil sichtbar ist. Eine weitere Verdrehung des Kopfes bewirkt die in Fig. 7C gezeigte Verschiebung des aktiven Bereichs 25. Dementsprechend nimmt in dieser Stellung der durchsichtige passive Bereich den größten Anteil der Linse 19 ein und erlaubt dem Benutzer die freie Sicht auf den Zahlenhintergrund.

Die Vorgänge bei einer nach links gerichteten Verdrehung oder einer Aufwärts- bzw. Abwärtsbewegung der Video-Brille sind analog und werden daher nicht näher erläutert.

Sobald der Laserzeiger 7 den Erfassungsbereich des Sensors 8 verläßt, wird keine Sensorausgabe bzw. kein "Treffer"-Signal der Verarbeitungseinheit 5 zugeführt. In diesem Zustand kann die Verarbeitungseinheit 5 ausgebildet sein, um wie oben erwähnt den aktiven Bereich 25 völlig auszublenden. Alternativ dazu kann die Verarbeitungseinheit 5 auch ausgebildet werden, um einen aktiven Restbereich, wie in Fig. 7C gezeigt, immer beim ausbleibenden Sensorsignal einzublenden.

Wenn technische Merkmale in den Ansprüchen mit Bezugszeichen versehen sind, so sind diese Bezugszeichen lediglich zum besseren Verständnis der Ansprüche vorhanden. Dementsprechend stellen solche Bezugszeichen keine Einschränkungen des Schutzumfangs solcher Elemente dar, die nur exemplarisch durch solche Bezugszeichen gekennzeichnet sind.

## Patentansprüche

1. Mobiles System zur Erzeugung eines virtuellen Displays für ein Mobiltelefon (4), das folgendes umfaßt:
ein Eingabemittel (9) zur Eingabe von benutzerbestimmbaren Daten und/oder Befehlen;
eine mit dem Eingabemittel (9) verbundene Verarbeitungseinheit (5); und
eine mit der Verarbeitungseinheit (5) verbundene mobile Displayvorrichtung (6) zur Erzeugung mindestens eines virtuellen Displays; wobei
die Verarbeitungseinheit (5) ausgebildet ist, ein Signal zur Erzeugung eines Bildes im virtuellen Display in Übereinstimmung mit den benutzerbestimmbaren Befehlen des Eingabemittels (9) und der relativen Stellung der Displayvorrichtung (6) zu einem willkürlich auswählbaren raumfesten Bezugspunkt auszugeben, der vom Benutzer bestimmt wird,
wobei die Verarbeitungseinheit (5) ausgebildet ist, bei einer Änderung der Stellung der Displayvorrichtung (6) bezüglich des willkürlich auswählbaren Bezugspunkts, das Bild in Richtung des willkürlich auswählbaren Bezugspunkts hin derart zu verschieben, daß für einen Benutzer der Displayvorrichtung (6) der Eindruck entsteht, daß das Bild bezüglich des willkürlich auswählbaren Bezugspunkts im wesentlichen unbeweglich ist,
wobei die Displayvorrichtung (6) einzeln steuerbaren Zellen (20) umfaßt, die in einem passiven bzw. aktiven Modus betreibbar sind, wobei die Zellen (20) im passiven Modus lichtdurchlässig sind und im aktiven Modus das Bild im virtuellen Display erzeugen,
und wobei die Verarbeitungseinheit (5) ausgebildet ist, das Bild in mindestens einem Bereich (25) von aktiven Zellen der Displayvorrichtung (6) zu erzeugen und die Zelle (20) außerhalb dieses Bereichs (25) im passiven Modus zu betreiben, so dass dem Benutzer ein Außenbild zur Verfügung steht.

2. Mobiles System nach Anspruch 1, wobei ein Mobiltelefon (4) mit der Verarbeitungseinheit (5) verbunden ist und wobei die Verarbeitungseinheit (5) weiterhin dazu ausgebildet ist, über das Mobiltelefon (4) Bilddaten in Übereinstimmung mit den benutzerbestimmbaren Befehlen zu holen und anhand der Bilddaten das Signal zur Erzeugung des Bildes im virtuellen Display auszugeben.

3. Mobiles System nach Anspruch 2, das weiterhin einen an der Displayvorrichtung (6) angebrachten Sender (7) und eine am Eingabemittel (9) angebrachte Sensoranordnung (8) umfaßt,
und wobei die Verarbeitungseinheit (5) ausgebildet ist, die Signale des Senders (7) und der Sensoranordnung (8) zu empfangen und auszuwerten, um die Raumwinkelstellung der Displayvorrichtung (6) bezüglich der Sensoranordnung (8) erfassen.

4. Mobiles System nach Anspruch 3, wobei der Sender (7) eine Laserquelle (13) umfaßt, die ihren Laserstahl (13') auf ein mit konstanter Geschwindigkeit drehbares Linsenrad (14) mit einer Vielzahl von symmetrisch angeordneten Mikrolinsen (15) ausgibt, um einen im wesentlichen parallel zur Ebene der Displayvorrichtung (5) liegenden Abtastbereich (17) zu erzeugen,
wobei die Sensoranordnung (8) ausgebildet ist, um den Abtastbereich (17) zu erfassen,
und wobei die Verarbeitungseinheit (5) ausgebildet derart ist, um die Raumwinkelstellung der Sensoranordnung (8) in Bezug zum Abtastbereich (17) anhand der Erfassungssignals der Sensoranordnung (8) und der Signale des Senders (7) zu bestimmen.

5. Mobiles System nach Anspruch 1 oder 2, das weiterhin eine an der Displayvorrichtung (6) angebrachte Sensoranordnung (8) und einen am Eingabemittel (9) angebrachten Sender (8) umfaßt,
und wobei die Verarbeitungseinheit (5) ausgebildet ist, die Signale des Senders (7) und der Sensoranordnung (8) zu empfangen und auszuwerten, um die Raumwinkelstellung der Displayvorrichtung (6) bezüglich der Sensoranordnung (8) erfassen.

6. Mobiles System nach Anspruch 5, wobei der Sender (7) eine Laserquelle (13) umfaßt, die ihren Laserstahl (13') auf ein mit konstanter Geschwindigkeit drehbares Linsenrad (14) mit einer Vielzahl von symmetrisch angeordneten Mikrolinsen (15) ausgibt, um einen im wesentlichen parallel zum Eingabemittel (8) liegenden Abtastbereich (17) zu erzeugen,
wobei die Sensoranordnung (8) ausgebildet ist, um den Abtastbereich (17) zu erfassen,
und wobei die Verarbeitungseinheit (5) ausgebildet derart ist, um die Raumwinkelstellung der Sensoranordnung (8) in Bezug zum Abtastbereich (17) anhand der Erfassungssignals der Sensoranordnung (8) und der Signale des Senders (7) zu bestimmen.

7. Mobiles System nach Anspruch 4 oder 6, wobei der Sender (7) ein Zeilensignal (α(t)) bei jeder vollen Umdrehung des Linsenrads (14) an die Verarbeitungseinheit (5) ausgibt,
und wobei die Verarbeitungseinheit (5) die Raumwinkelstellung der Displayvorrichtung (5) anhand der Beziehung zwischen dem Erfassungssignal der Sensoranordnung (8) und dem Zeilensignal (α(t)) des Senders (7) bestimmt.

8. Mobiles System nach einem oder mehreren der Ansprüche 1-7, wobei das Eingabemittel eine faltbare Tastatur (9) umfaßt.

9. Mobiles System nach einem oder mehreren der Ansprüche 1-8, wobei die Displayvorrichtung eine Video-Brille (6) umfaßt.

10. Mobiles System nach Anspruch 8 oder 9, wobei die Sensoranordnung (8) an einem an der Tastatur (9) gelenkig angebrachten Sensorstab (24) befestigt ist.

11. Mobiles System nach Anspruch 10, wobei die Sensoranordnung (8) und der Sensorstab (24) in einen an der Rückseite der Tastatur (9) angeordneten Einschnitt (23) einführbar sind.

12. Mobiles System nach einem oder mehreren der Ansprüche 1-11, wobei das Mobiltelefon (4) ausgebildet ist, eine Verbindung zum Internet über GSM, GPRS, UMTS, WAP- oder TCP/IP-Protokoll, oder eine Verbindung zu einem Intranet aufzubauen; oder
wobei das Mobiltelefon (4) ausgebildet ist, eine Verbindung zu einem ferngelegenen Daten- und/oder Programmserver (10) aufzubauen; oder
wobei das Bild der Displayvorrichtung (6) eine Arbeitsstation darstellt.

## Claims

1. Mobile system for generating a virtual display for a mobile telephone (4) comprising:
an input means (9) for the input of user-definable data and/or commands;
a processing unit (5) connected to the input means (9); and
a mobile display device (6) connected to the processing unit (5) for generating at least one virtual display; wherein
the processing unit (5) is adapted for outputting a signal for generating an image in the virtual display in accordance with the user-definable commands of the input means (9) and the relative position of the display device (6) to an arbitrarily selectable, fixed reference point which is defined by the user,
wherein the processing unit (5) is adapted, in case of a change in the position of the display device (6) in respect to the arbitrarily selectable reference point, to shift the image in the direction of the arbitrarily selectable reference point, in such a manner that to a user of the display device (6), the impression is created that the image is substantially immobile in respect to the arbitrarily selectable reference point,
wherein the display device (6) comprises individually controllable cells (20) operable in a passive or active mode, respectively, the cells (20) being translucent in the passive mode and generating the image in the virtual display in the active mode,
and wherein the processing unit (5) is adapted to generate the image in at least one region (25) of active cells of the display device (6) and to operate the cell (20) outside this region (25) in the passive mode, so that an exterior image is available to the user.

2. Mobile system according to claim 1, wherein a mobile telephone (4) is connected with the processing unit (5) and wherein the processing unit (5) is further adapted to fetch, via the mobile telephone (4), image data in accordance with the user-definable commands and to output, based on the image data, the signal for generating the image in the virtual display.

3. Mobile system according to claim 2, further comprising a transmitter (7) attached to the display device (6) and a sensor arrangement (8) attached to the input means (9),
and wherein the processing unit (5) is adapted to receive and evaluate the signals of the transmitter (7) and the sensor arrangement (8) in order to detect the spatial angular position of the display device (6) in respect to the sensor arrangement (8).

4. Mobile system according to claim 3, wherein the transmitter (7) comprises a laser source (13) outputting its laser beam (13') onto a lens wheel (14) rotatable with constant speed and having a plurality of symmetrically arranged microlenses (15) in order to create a scan area (17) positioned substantially parallel to the plane of the display device (5),
wherein the sensor arrangement (8) is adapted for detecting the scan area (17),
and wherein the processing unit (5) is adapted such as to determine the spatial angular position of the sensor arrangement (8) in respect to the scan area (17) based on the detection signals of the sensor arrangement (8) and the signals of the transmitter (7).

5. Mobile system according to claim 1 or 2, further comprising a sensor arrangement (8) attached to the display device (6) and a transmitter (8) attached to the input means (9),
and wherein the processing unit (5) is adapted for receiving and evaluating the signals of the transmitter (7) and the sensor arrangement (8) in order to detect the spatial angular position of the display device (6) in respect to the sensor arrangement (8).

6. Mobile system according to claim 5, wherein the transmitter (7) comprises a laser source (13) outputting its laser beam (13') onto a lens wheel (14) rotatable with constant speed and having a plurality of symmetrically arranged microlenses (15) in order to create a scan area (17) positioned substantially parallel to the input means (8),
wherein the sensor arrangement (8) is adapted for detecting the scan area (17),
and wherein the processing unit (5) is adapted such as to determine the spatial angular position of the sensor arrangement (8) in respect to the scan area (17) based on the detection signals of the sensor arrangement (8) and the signals of the transmitter (7).

7. Mobile system according to claim 4 or 6, wherein the transmitter (7) outputs a line signal (α(t)) to the processing unit (5) with each full rotation of the lens wheel (14),
and wherein the processing unit (5) determines the spatial angular position of the display device (6) based on the relationship between the detection signal of the sensor arrangement (8) and the line signal (α(t)) of the transmitter (7).

8. Mobile system according to one or more of claims 1-7, wherein the input means comprises a collapsible keyboard (9).

9. Mobile system according to one or more of claims 1-8, wherein the display device comprises video goggles (6).

10. Mobile system according to claim 8 or 9, wherein the sensor arrangement (8) is fastened to a sensor rod (24) jointed to the keyboard (9).

11. Mobile system according to claim 10, wherein the sensor arrangement (8) and the sensor rod (24) is insertable into a recess (23) arranged on the rear side of the keyboard (9).

12. Mobile system according to one or more of claims 1-11, wherein the mobile telephone (4) is adapted to establish a connection to the Internet via GSM, GPRS, UMTS, WAP or TCP/IP protocol or a connection to an Intranet; or
wherein the mobile telephone (4) is adapted to establish a connection to a remote data and/or program server (10); or
wherein the image of the display device (6) represents a workstation.

## Revendications

1. Système mobile pour produire un affichage virtuel pour un téléphone mobile (4), comprenant les éléments suivants :
des moyens d'introduction (9), pour introduire des données et/ou des ordres pouvant être déterminés par l'utilisateur ;
une unité de traitement (5), reliée aux moyens d'introduction (9) ; et
un dispositif d'affichage mobile (6), relié à l'unité de traitement (5), pour produire au moins un affichage virtuel ; où
l'unité de traitement (5) est réalisée pour fournir un signal pour produire une image dans l'affichage virtuel, en coïncidence avec les ordres, pouvant être déterminés par l'utilisateur, des moyens d'introduction (9) et en coïncidence avec la position relative du dispositif d'affichage (6) par rapport à un point de référence fixe dans l'espace, pouvant être sélectionné de façon arbitraire, déterminé par l'utilisateur,
l'unité de traitement (5) étant réalisée de .manière que, en cas de changement de la position du dispositif d'affichage (6) par rapport au point de référence pouvant être sélectionné de façon arbitraire, l'image soit décalée dans la direction du point de référence pouvant être sélectionné de façon arbitraire, de manière que, pour l'utilisateur du dispositif d'affichage (6), apparaisse l'impression selon laquelle l'image est sensiblement immobile par rapport au point de référence pouvant être sélectionné de façon arbitraire,
le dispositif d'affichage (6) comprenant des cellules (20) pouvant être commandées individuellement, qui peuvent fonctionner en un mode passif ou actif, les cellules (20) lorsqu'elles sont en mode passif, étant transparentes à la lumière et, lorsqu'elles sont en mode actif, produisant l'image dans l'affichage virtuel,
et où l'unité de traitement (5) est réalisée de manière à produire l'image, en au moins une zone (25), par des cellules actives du dispositif d'affichage (6) et faire fonctionner la cellule (20), hors de cette zone (25), en mode passif, de manière qu'une image extérieure soit mise à disposition de l'utilisateur.

2. Système mobile selon la revendication 1, où un téléphone mobile (4) est relié à l'unité de traitement (5) et où l'unité de traitement (5) est, en plus, réalisée pour, par l'intermédiaire du téléphone mobile (4), obtenir des données images en coïncidence avec les ordres pouvant être déterminés par l'utilisateur et, à l'aide des données images, générer le signal servant à produire l'image dans l'affichage virtuel.

3. Système mobile selon la revendication 2, comprenant en plus un émetteur (7), monté sur le dispositif d'affichage (6), et un dispositif capteur (8), monté sur les moyens d'introduction (9),
et où l'unité de traitement (5) est réalisée pour recevoir et évaluer les signaux de l'émetteur (7) et du dispositif capteur (8), pour détecter la position angulaire, dans l'espace, du dispositif d'affichage (6) par rapport au dispositif capteur (8).

4. Système mobile selon la revendication 3, l'émetteur (7) comprenant une source laser (13) émettant son rayon laser (13') sur une roue à lentilles (14), susceptible de tourner à vitesse constante, munie d'une pluralité de micro-lentilles (15) disposées de façon symétrique pour générer une zone d'exploration (17) située sensiblement parallèlement au plan du dispositif d'affichage (5),
le dispositif capteur (8) étant réalisé pour détecter la zone d'exploration (17),
et où l'unité de traitement (5) est réalisée pour déterminer la position angulaire, dans l'espace, du dispositif capteur (8), par rapport à une plage d'exploration (17), à l'aide du signal de détection du dispositif capteur (8) et des signaux de l'émetteur (7).

5. Système mobile selon la revendication 1 ou 2, qui comprend en plus un dispositif capteur (8), monté sur le dispositif d'affichage (6), et un émetteur (8), monté sur les moyens d'introduction (9),
et où l'unité de traitement (5) est réalisée de manière à recevoir et évaluer les signaux de l'émetteur (7) et du dispositif capteur (8), pour détecter la position angulaire, dans l'espace, du dispositif d'affichage (6) par rapport au dispositif capteur (8).

6. Système mobile selon la revendication 5, l'émetteur (7) comprenant une source laser (13) qui envoie son rayon laser (13') sur une roue à lentilles (14) susceptible de tourner à vitesse constante et munie d'une pluralité de micro-lentilles (15) disposées symétriquement, pour produire une zone d'exploration (17) située sensiblement parallèlement aux moyens d'introduction (8),
le dispositif capteur (8) étant réalisé pour détecter la zone d'exploration (17),
et où l'unité de traitement (5) est réalisée de manière à déterminer la position angulaire, dans l'espace, du dispositif capteur (8) par rapport à la zone d'exploration (17), à l'aide du signal de détection du dispositif capteur (8) et des signaux de l'émetteur (7).

7. Système mobile selon la revendication 4 ou 6, l'émetteur (7) émettant un signal de lignes (α(t)) à chaque tour de rotation complète la roue à lentilles (14) sur l'unité de traitement (5).
et où l'unité de traitement (5) détermine la position angulaire, dans l'espace, du dispositif d'affichage (6) à l'aide de la relation entre le signal de détection du dispositif capteur (8) et le signal de lignes (α(t)) de l'émetteur (7).

8. Système mobile selon une ou plusieurs des revendications 1 à 7, les moyens d'introduction comprenant un clavier (9) pliable.

9. Système mobile selon une ou plusieurs des revendications 1 à 8, le dispositif d'affichagé comprenant une paire de lunettes vidéo (6).

10. Système mobile selon la revendication 8 ou 9, le dispositif à capteur (8) étant fixé sur une barre support de capteur (24), montée de façon articulée sur le clavier (9).

11. Système mobile selon la revendication 10, le dispositif à capteur (8) et la barre support de capteur (24) étant susceptibles d'être introduits dans une entaille (23) ménagée en face arrière du clavier (9).

12. Système mobile selon une ou plusieurs des revendications 1 à 11, le téléphone mobile (4) étant réalisé pour établir une liaison avec l'Internet par un protocole GSM, GPRS, UMTS, WAP ou TCP/IP, ou bien établir une liaison avec un Intranet ; ou
le téléphone mobile (4) est réalisé pour établir une liaison avec un serveur de données et/ou de programmes (10) distant ; ou
l'image du dispositif d'affichage (6) représentant un poste de travail.
